# DEMANDE DE BREVET EUROPEEN

(11) **EP 2 108 560 A1**
(43) Date de publication de la demande: **14.10.2009**
(21) Numéro de dépôt: 09354006.0
(22) Date de dépôt: 10.02.2009
(51) Int. Cl.: B61B 13/00

(54) **Système d'aide à l'embarquement et/ou au débarquement de passagers à bord de cabines**

(30) Priorité: 14.02.2008 FR 0800725; 05.03.2008 FR 0801209
(71) Demandeur: Pomagalski, 38340 Voreppe (FR)
(72) Inventeur: Mollet, Alain, 74940 Annecy le Vieux (FR)
(74) Mandataire: Hecké, Gérard

(57) **Abrégé**

Un système d'aide à l'embarquement et/ou au débarquement (11, 12) de passagers à bord de cabines (C) d'une installation de transport (10) où les cabines (C) se déplacent le long d'un circuit fermé, comporte un câble (14, 28) en boucle fermée ayant un premier tronçon (T1, T3) agencé tangentiellement à un tronçon du circuit fermé et un deuxième tronçon (T2, T4) disposé le long d'une zone d'embarquement et/ou de débarquement (16, 29) des passagers à bord de véhicules (V, Y) accouplés au câble (14, 28) à intervalle régulier égal à un multiple de l'intervalle entre les cabines (C). Les moyens d'entraînement (M) du câble (14, 28) sont associés à des moyens d'asservissement de la vitesse de défilement du câble (14, 28) en fonction de la vitesse de déplacement des cabines (C) aptes à assurer en continu que chaque véhicule (V, Y) parcourant le premier tronçon (T1, T3) occupe une position adjacente à une cabine (C).

## Description

### Domaine technique de l'invention

L'invention est relative à un système d'aide à l'embarquement et/ou au débarquement de passagers à bord de cabines d'une installation de transport dans laquelle les cabines se déplacent à vitesse sensiblement constante à intervalle régulier le long d'un circuit fermé.

### État de la technique

De nombreuses installations de transport du type mentionné ci-dessus sont utilisées dans les villes ou les stations de ski pour constituer des téléporteurs, ou bien dans des lieux publics pour constituer des appareils d'attraction, par exemple de type grande roue verticale à cabines suspendues. Les cabines utilisées dans ces installations, définies par ce qui supporte les passagers, peuvent prendre différentes formes suivant les applications, télécabines, téléphériques ou télébennes, ou bien encore des capsules dans le cas d'un appareil d'attraction de type grande roue verticale. Dans tous les cas, les cabines se déplacent à vitesse sensiblement constante à intervalles réguliers le long d'un circuit fermé, grâce à un câble tracteur éventuellement porteur, ou bien par le fait que les capsules sont accrochées sur une structure tournante pour le cas d'un appareil d'attraction de type grande roue verticale.

Ces installations comportent au moins un quai disposé le long du circuit fermé pour permettre aux passagers d'embarquer à bord des cabines et/ou d'en débarquer. Les opérations d'embarquement et de débarquement restent les plus délicates dans le sens où le passager ou le groupe de passagers présente un différentiel de vitesse qu'il faut compenser, ceci quasi-instantanément.

Pour sécuriser les opérations d'embarquement et de débarquement à bord des cabines, il est nécessaire de limiter le différentiel de vitesse à une valeur seuil de 0,3 m/s. Une telle contrainte implique que la vitesse de déplacement de l'ensemble des cabines le long du circuit fermé est plafonnée à cette valeur seuil. Mais il résulte de cette exigence fonctionnelle de l'installation que le débit horaire de l'installation en terme de passagers est considérablement limité et peut ne pas correspondre aux attentes des exploitants de l'installation et des passagers.

### Objet de l'invention

L'objet de l'invention consiste à réaliser un système d'aide à l'embarquement et/ou au débarquement de passagers à bord de cabines d'une installation qui renforce la sécurité et le confort des passagers pendant les opérations d'embarquement et de débarquement, sans apporter de limitation du débit de l'installation.

Le système selon l'invention est remarquable en ce qu'il comporte :
- un câble en boucle fermée défilant par des moyens d'entraînement et ayant un premier tronçon agencé tangentiellement à un tronçon du circuit fermé et un deuxième tronçon disposé le long d'une zone d'embarquement et/ou de débarquement des passagers à bord de véhicules accouplés au câble au moins sur le premier tronçon, avec un échelonnement égal à un multiple de l'intervalle entre les cabines,
- et des moyens d'asservissement de la vitesse de défilement du câble en fonction de la vitesse de déplacement des cabines pour positionner en continu chaque véhicule parcourant le premier tronçon en regard d'une cabine.

Un tel système d'aide à l'embarquement et/ou au débarquement permet de réaliser chacune des opérations d'embarquement et de débarquement à bord des cabines de l'installation en deux temps : un premier type de transfert permet aux passagers de varier entre la zone d'embarquement et/ou de débarquement du système et les véhicules du système, et un deuxième type de transfert permet aux passagers de varier entre les véhicules du système et les cabines de l'installation. Les deux types de transfert peuvent être réalisés dans un ordre variable, en fonction de l'opération à réaliser au niveau des cabines (embarquement ou débarquement). Le fractionnement des opérations d'embarquement et de débarquement en deux transferts successifs permet d'associer un premier différentiel de vitesse au premier type de transfert et un deuxième différentiel de vitesse au deuxième type de transfert. Grâce au système d'aide selon l'invention, le deuxième transfert entre les cabines de l'installation et les véhicules du système d'aide est réalisé en maintenant un différentiel de vitesse sensiblement égal à zéro, quelle que soit la vitesse de déplacement des cabines le long du circuit fermé. De cette manière, quel que soit le débit horaire prévu pour l'installation, la sécurité des passagers pendant le deuxième type de transfert est totale. Les risques éventuels pour les passagers sont donc déportés au premier type de transfert entre les véhicules du système et la zone d'embarquement et/ou de débarquement du système. Mais pour limiter ces risques, il suffit d'affecter au premier transfert, grâce à une conception adaptée du système d'aide, une valeur inférieure ou égale à 0,3 m/s, idéalement égale à zéro.

Le système d'aide selon l'invention permet donc de garantir une sécurité optimale pour les opérations d'embarquement et de débarquement à bord des cabines indépendamment de la vitesse de déplacement des cabines. Le système d'aide permet ainsi d'exploiter l'installation de transport selon un débit horaire élevé avec une vitesse de déplacement des cabines nettement supérieure à l'art antérieur, par exemple supérieure ou égale à 0,5 m/s, tout en assurant parallèlement une sécurité renforcée pour les opérations d'embarquement et de débarquement à bord des cabines. Pour cela, le système d'aide permet de fractionner chaque opération en un premier transfert (véhicule-zone d'embarquement et/ou de débarquement) où le différentiel de vitesse est par exemple inférieur ou égal à 0,3 m/s et en un deuxième transfert (véhicule-cabine) où le différentiel de vitesse est sensiblement nul.

Selon un mode de réalisation préférentiel, les moyens d'accouplement des véhicules au câble sont constitués par des pinces fixes d'accrochage portées par les véhicules, et la zone d'embarquement et/ou de débarquement comporte un tapis de transfert ayant une trajectoire coïncidant avec la trajectoire des véhicules dans le deuxième tronçon. Par un réglage adapté de la vitesse du tapis de transfert, une telle variante permet de maintenir un différentiel de vitesse sensiblement égal à zéro pendant le transfert entre la zone d'embarquement et/ou de débarquement du système et les véhicules du système, pour une sécurité renforcée.

D'autres caractéristiques techniques peuvent être utilisées isolément ou en combinaison :
- au moins l'un des véhicules comporte des moyens d'ajustement du périmètre de la boucle fermée formée par le câble,
- un chemin de roulement est disposé parallèlement au câble pour guider les véhicules pendant leur déplacement,
- chaque véhicule comporte un chariot roulant dans le chemin de roulement et une plate-forme solidaire du chariot correspondant par des moyens de liaison,
- les moyens de liaison comprennent des moyens d'orientation de la plate-forme par rapport au chariot selon au moins un axe de rotation et des moyens de maintien automatique de l'assiette de la plate-forme par pivotement autour dudit axe de rotation,
- chaque chariot est équipé d'une première roue et d'une deuxième roue décalées dans la direction de déplacement du chariot, le chemin de roulement comportant deux rails de guidage indépendants recevant respectivement l'une des première et deuxième roues et occupant une position relative dans le plan vertical adaptée pour maintenir le chariot horizontal quelle que soit sa position le long du chemin de roulement,
- chaque véhicule est équipé d'un seuil rétractable, variant par des moyens d'actionnement entre une position sortie en saillie du véhicule, occupée sur le premier tronçon pour combler l'intervalle entre le véhicule et la cabine adjacente, et une position rentrée logé dans le véhicule,
- chaque véhicule comporte en saillie une rampe inclinable autour d'un axe de pivotement coïncidant avec la direction de déplacement du véhicule, par des moyens de variation de l'angle entre la rampe et le véhicule,
- les moyens de variation de l'angle entred' rampe et le véhicule comporte un système de support à parallélogramme déformable comprenant d'une part deux bras pivotants parallèles entre eux, articulés sur le véhicule à une extrémité proximale, et dont l'un au moins supporte ladite rampe, d'autre part un élément de liaison d'orientation spatiale fixe par rapport au véhicule, articulé aux extrémités distales desdits bras pivotants, et enfin un vérin d'actionnement muni d'une tige coulissante dont la translation commande la variation de l'angle entre les bras pivotants et l'élément de liaison,
- le circuit fermé présente une forme circulaire comprise dans un plan vertical et la partie de chemin de roulement bordant le premier tronçon présente une forme d'arc de cercle compris dans un plan vertical parallèle.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
- la figure 1 représente un équipement de transport en vue de dessus comprenant un exemple de système d'aide selon l'invention,
- la figure 2 représente une vue arrière de la partie inférieure de l'équipement de la figure 1, dans un plan de coupe vertical A-A visible sur la figure 1,
- la figure 3 illustre une vue avant de la partie inférieure de l'équipement de la figure 1, dans le plan de coupe A-A,
- la figure 4 est une vue de détail de la partie gauche de la figure 3,
- les figures 5 et 6 illustrent une variante dans laquelle les véhicules sont modifiés.

### Description d'un mode préférentiel de l'invention

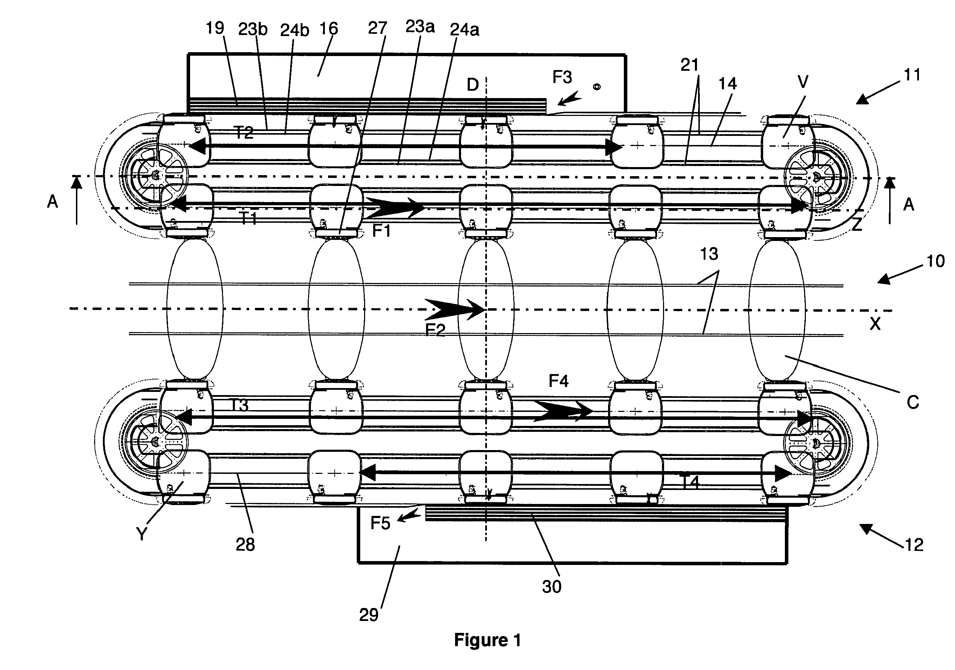

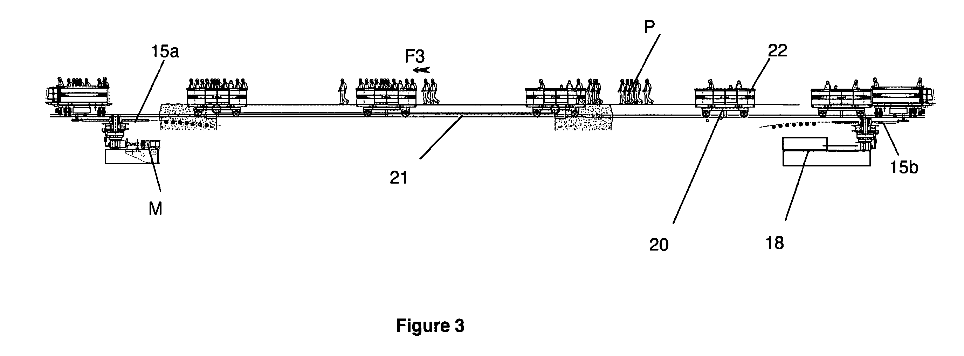

Les figures 1 à 4 illustrent un équipement de transport de passagers P composé principalement d'une installation de transport 10 véhiculant en circuit fermé des cabines C, d'un système d'aide à l'embarquement 11 à bord des cabines C et d'un système d'aide au débarquement 12.

Dans l'exemple particulier décrit non limitativement, l'installation de transport 10 est constituée par un appareil d'attraction de type grande roue verticale où les cabines C, formées par des capsules, sont suspendues. Ce genre d'appareil est connu également sous le nom de roue « Ferris ». L'installation 10 met en oeuvre une structure centrale 13 circulaire et rotative autour d'un axe horizontal D fixement maintenu à distance du sol. Les cabines C sont accrochées à la périphérie de la structure 13 selon une liaison permettant aux cabines C de conserver leur horizontalité.

En cours de fonctionnement, l'installation de transport 10 assure un déplacement homogène de l'ensemble des cabines C. Plus précisément, les cabines C se déplacent à vitesse sensiblement constante (égale à la multiplication du rayon de la structure 13 par la vitesse angulaire de rotation de la structure 13) à intervalle régulier. Au cours de ce déplacement, les cabines C exercent un mouvement de translation circulaire. Il en résulte que les cabines C se déplacent toutes le long d'un même circuit fermé fictif de forme circulaire, le circuit fermé correspondant à la trajectoire circulaire des cabines C pendant une rotation complète de la structure 13.

L'équipement de transport 10 est équipé dans sa partie inférieure, c'est-à-dire à proximité du sol sur lequel repose la structure 13, de deux systèmes indépendants 11, 12 respectivement pour l'aide aux passagers P à l'embarquement à bord des cabines C de l'installation 10 et pour l'aide au débarquement depuis les cabines C pour les passagers P préalablement embarqués. Les systèmes d'aide 11 et 12 sont disposés de part et d'autre du plan vertical X de la structure centrale 13 pour maintenir un flux unidirectionnel des passagers P au sein de l'équipement de transport. En raison de la symétrie de conception des systèmes 11 et 12, seul le système d'aide à l'embarquement 11 sera décrit en détail.

Le système d'aide à l'embarquement 11 comporte un câble 14 agencé en boucle fermée en passant aux extrémités dans deux poulies de renvoi 15a, 15b décalées horizontalement dans une direction parallèle au plan vertical X.

Les poulies de renvoi 15a, 15b sont respectivement motrice et folle. Un moteur électrique M assure la mise en rotation continue de la poulie motrice 15a selon un sens unique de rotation, par l'intermédiaire d'un renvoi d'angle et d'un réducteur. Le moteur électrique M associé au réducteur, au renvoi d'angle et aux arbres petite et grande vitesse constituent des moyens d'entraînement du câble 14, déplaçant le câble 14 dans un mouvement de défilement unidirectionnel. Chaque brin de la boucle de câble 14, un brin correspondant à la partie de câble 14 tendue entre les poulies 15a, 15b, constitue une voie sensiblement rectiligne de circulation unidirectionnelle de véhicules V accouplés en continu au câble 14 à intervalle régulier. L'espacement entre deux véhicules V successifs est donc constant, choisi pour constituer un échelonnement égal à un multiple de l'intervalle entre les cabines C de l'installation 10. Dans l'exemple particulier illustré, l'intervalle entre deux véhicules V successifs est égal à l'intervalle entre deux cabines C.

Le décalage entre le plan vertical X et la ligne passant par les centres des poulies 15a, 15b, incluse dans le plan A-A, est ajusté de manière que le brin de câble 14 le plus proche de la structure 13 constitue un premier tronçon T1 de câble 14 agencé tangentiellement à un tronçon du circuit fermé le long duquel se déplacent les cabines C. Le sens de défilement du câble 14 est choisi pour que les véhicules V cheminant sur le premier tronçon T1 se déplacent (flèche F1 de la figure 1) dans le même sens que les cabines C (flèche F2 de la figure 1). Le premier tronçon T1 constitue donc une voie de circulation unidirectionnelle tangente au circuit fermé des cabines C le long de laquelle les véhicules V se déplacent dans le même sens que les cabines C.

Après le parcours du premier tronçon T1, les véhicules V reviennent en sens inverse sur la voie parallèle de circulation unidirectionnelle constituée par le brin de câble 14 opposé. Une zone d'embarquement 16 des passagers P à bord des véhicules V est disposée le long de la voie de circulation opposée au premier tronçon T1. La partie de cette voie contiguë à la zone d'embarquement 16 constitue un deuxième tronçon T2 de câble 14 caractérisé par sa disposition le long de la zone 16.

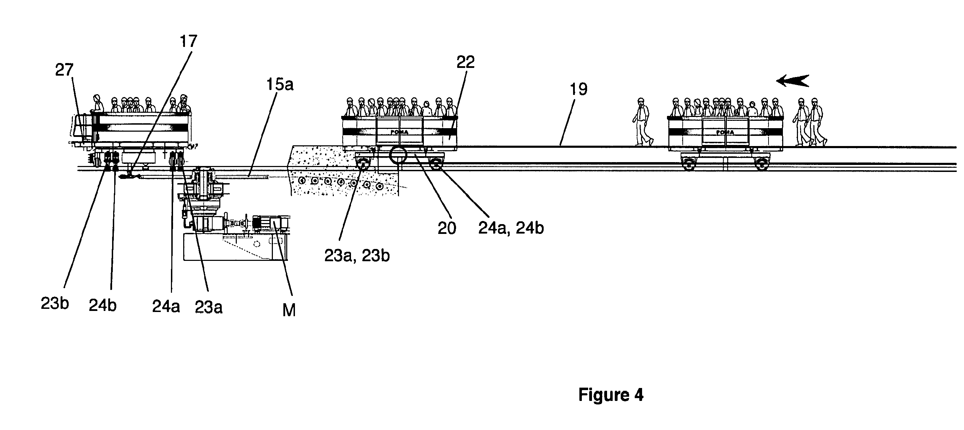

Les véhicules V sont constamment accouplés au câble 14 à l'aide de pinces fixes d'accrochage 17 (figure 4) portées par les véhicules V. Pour assurer une tension du câble 14 constante dans le temps malgré un allongement inévitable du câble 14, la poulie de renvoi folle 15b est associée à un mécanisme de réglage 18 de la tension du câble 14 utilisant par exemple un contrepoids ou l'actionnement d'un vérin hydraulique. Pour garantir l'intervalle régulier entre les véhicules V malgré l'allongement du câble 14 et l'actionnement du mécanisme de réglage 18, au moins l'un des véhicules V comporte des moyens d'ajustement (non représentés) du périmètre de la boucle fermée formée par le câble 14. À titre d'exemple, une possibilité pour conformer le câble 14 en boucle fermée consiste à fixer un culot à chaque extrémité libre avant conformation du câble 14, puis à fixer les deux culots sur une pièce de liaison solidaire de l'un des véhicules V. Les moyens d'ajustement sont alors réalisés par le fait que la pièce de liaison comprend des moyens de réglage de la distance entre les zones de fixation des culots.

Les moyens d'entraînement du câble 14 sont associés à des moyens d'asservissement (non représentés) de la vitesse de défilement du câble 14 en fonction de la vitesse de déplacement des cabines C. Les moyens d'asservissement sont conçus pour positionner en continu chaque véhicule V parcourant le premier tronçon T1 dans une position adjacente à une cabine C. La position adjacente correspond à une configuration relative du véhicule V par rapport à la cabine C telle que le véhicule V et la cabine C sont nez à nez, c'est-à-dire en regard l'une de l'autre, dans une direction perpendiculaire au plan vertical X. De tels moyens d'asservissement peuvent être intégrés dans une unité de commande (non représentée) pilotant le moteur électrique M en fonction de signaux reçus depuis des premiers capteurs de présence assurant la détection des cabines C et depuis des deuxièmes capteurs de présence détectant les véhicules V.

Pour moduler voire annuler le différentiel de vitesse au moment de l'embarquement à bord des véhicules V depuis la zone d'embarquement 16 bordant le deuxième tronçon T2, la zone 16 comporte un tapis de transfert 19 ayant une trajectoire coïncidant avec la trajectoire des véhicules V dans le deuxième tronçon T2. La notion de coïncidence signifie une configuration relative du véhicule V par rapport au tapis de transfert 19 telle que le véhicule V et le tapis 19 sont côte à côte dans une direction perpendiculaire au plan vertical X.

Dans l'exemple de système d'aide à l'embarquement 11 illustré, chaque véhicule V comporte un chariot 20 roulant dans un chemin de roulement 21 en boucle fermée et une plate-forme 22 solidaire du chariot 20 correspondant par des moyens de liaison. Le chemin de roulement 21 est disposé parallèlement au câble 14 sur toute la longueur du câble 14 pour guider les véhicules V pendant leur déplacement. Outre la fonction de guidage des véhicules V, le chemin de roulement 21 assure le portage de l'ensemble du poids de chaque véhicule V, de manière que la seule fonction attribuée au câble 14 défilant est de garantir l'entraînement des véhicules V.

L'installation de transport 10 étant un appareil d'attraction de type grande roue verticale à cabines C suspendues, le circuit fermé fictif le long duquel les cabines C se déplacent présente une forme circulaire comprise dans un plan vertical coïncidant avec le plan vertical X médian de la structure 13. Le tronçon de circuit fermé le long duquel le premier tronçon T1 est disposé tangentiellement présente ainsi une forme d'arc de cercle compris dans le plan vertical X. Pour garantir une position adjacente des véhicules V par rapport aux cabines C sur toute la longueur du premier tronçon T1, la partie de chemin de roulement 21 bordant le premier tronçon T1 de câble 14 présente une forme d'arc de cercle compris dans un plan vertical Z parallèle au plan vertical X.

Pour le confort des passagers P embarqués à bord des véhicules V, plus précisément sur la plate-forme 22, il est nécessaire de maintenir la plate-forme 22 dans une position horizontale quelle que soit la position du véhicule V le long de la partie de chemin de roulement 21 bordant le premier tronçon T1. Une première solution non représentée résulte de moyens de liaison entre le chariot 20 et la plate-forme 22 qui comprennent des moyens d'orientation de la plate-forme 22 par rapport au chariot 20 selon au moins un axe de rotation et des moyens de maintien automatique de l'assiette de la plate-forme 22 par pivotement autour dudit axe de rotation. Le mécanisme de maintien automatique de l'assiette de la plate-forme 22 assure la conservation de la position horizontale du sol de la plate-forme 22 quelle que soit l'orientation angulaire du chariot 20 par rapport à la plate-forme 22 autour de l'axe de rotation.

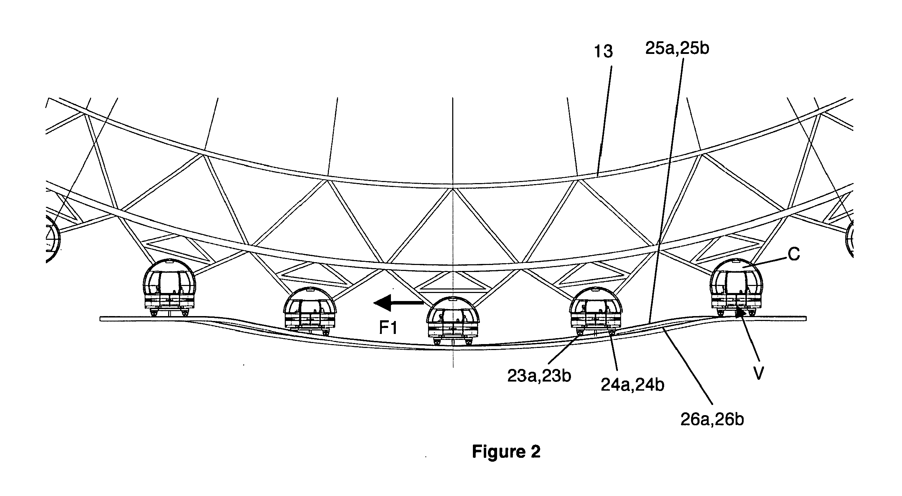

Une deuxième solution est représentée sur la figure 2. D'un côté du plan médian vertical incluant sa direction de déplacement, chaque chariot 20 est équipé d'une première roue 23a et d'une deuxième roue 24a décalées dans la direction de déplacement du chariot 20. Le chemin de roulement 21 comporte deux rails de guidage 25a, 26a indépendants. Le rail de guidage 25a reçoit la première roue 23a pour en assurer son roulage et son guidage, et le rail de guidage 26a reçoit la deuxième roue 24a pour en assurer son roulage et son guidage. Les rails 25a, 26a occupent une position relative, dans le plan vertical, adaptée pour maintenir le chariot 20 horizontal quelle que soit sa position le long du chemin de roulement 21. À titre d'exemple, en notant α le décalage entre les rails 25a, 26a en un point donné de la partie de chemin de roulement 21 bordant le premier tronçon T1 et en notant ϕ l'angle que forment les rails 25a, 26a en ce point par rapport à l'horizontale, alors α=L.sin(ϕ) où L est la longueur séparant les roues 23a et 24a. De l'autre côté du plan médian vertical incluant sa direction de déplacement, chaque chariot 20 est équipé d'une deuxième paire de première et deuxième roues 23b, 24b décalées dans la direction de déplacement du chariot 20 et roulant dans deux rails de guidage 25b, 26b indépendants appartenant au chemin de roulement 21 et remplissant les mêmes caractéristiques que les rails 25a, 26a. En dehors de la partie bordant le premier tronçon T1 de câble 14, les rails 25a, 25b, 26a, 26b sont tous coplanaires et horizontaux pour assurer un guidage du véhicule V dans un plan horizontal.

Chaque véhicule V est équipé d'un seuil rétractable 27, variant par des moyens d'actionnement (non représentés) entre une position sortie en saillie du véhicule V, occupée au moins sur le premier tronçon T1 pour combler au moins partiellement l'intervalle entre le véhicule V et la cabine C adjacente, et une position rentrée logé dans le véhicule V. L'actionnement du seuil rétractable 27 peut être prévu pendant le déplacement sur le deuxième tronçon T2, jusqu'à la position sortie ou une position intermédiaire entre les positions rentrée et sortie, en vue de combler partiellement ou totalement l'intervalle entre le véhicule V et le tapis de transfert 19. Tout moyen d'actionnement adapté peut être utilisé, par exemple un moteur électrique ou une solution par piston.

L'embarquement d'un passager P à bord d'une cabine C de l'installation de transport 10 se pratique de la manière suivante : dans un premier temps, le passager préalablement sur le quai de la zone d'embarquement 16 vient se placer (flèche F3 de la figure 1) sur le tapis de transfert 19 de la zone 16. Cette opération au cours de laquelle un différentiel de vitesse existe entre le passager P et le tapis de transfert 19 ne présente aucun risque compte tenu que le tapis de transfert 19 se déplace conformément au sens de marche du passager P. La vitesse du tapis de transfert 19 est par exemple réglée pour être égale à la vitesse de déplacement des véhicules V le long du deuxième tronçon T2. Une telle variante permet de maintenir un différentiel de vitesse égal à zéro pendant le premier transfert du passager P de la zone d'embarquement 16 vers le véhicule V, pour une sécurité renforcée. Le véhicule V à bord duquel le passager P a embarqué est ensuite entraîné à vitesse constante par le câble 14 tout en étant guidé par le chemin de roulement 21. Les moyens d'asservissement associés aux moyens d'entraînement du câble 14 garantissent que le véhicule V vient automatiquement occuper une position adjacente à une cabine C de manière à être positionnée sur toute la longueur du premier tronçon T1 en regard de la cabine C. Le transfert du passager P à bord de la cabine C depuis le véhicule V peut alors se pratiquer avec un différentiel de vitesse égal à zéro. Par un mécanisme de sécurité de type barrière ou porte palière, le transfert peut éventuellement n'être autorisé que sur un segment du premier tronçon T1. Après le transfert, le véhicule V est ensuite ramené par le câble 14 en direction du tronçon T2 pour un nouvel embarquement.

Outre le système d'aide à l'embarquement 11 décrit ci-dessus, l'équipement de transport comporte un système d'aide au débarquement 12 similaire au système d'aide à l'embarquement 11, disposé symétriquement par rapport au plan vertical X. À l'image du système d'embarquement 11, le système d'aide au débarquement 12 comporte un câble 28 en boucle fermée défilant par des moyens d'entraînement et ayant un premier tronçon T3 agencé tangentiellement à un tronçon du circuit fermé et un deuxième tronçon T4 disposé le long d'une zone de débarquement 29 des passagers P depuis des véhicules Y accouplés fixement au câble 28 avec un échelonnement régulier égal à un multiple de l'intervalle entre les cabines C. Les moyens d'entraînement du câble 28 sont également associés à des moyens d'asservissement de la vitesse de défilement du câble 28 en fonction de la vitesse de déplacement des cabines C pour positionner en continu chaque véhicule Y parcourant le premier tronçon T3 en regard d'une cabine C tout en se déplaçant dans le même sens (flèche F4). Le tronçon de circuit fermé le long duquel est agencé tangentiellement le premier tronçon T1 du câble 14 est identique à celui le long duquel est agencé tangentiellement le premier tronçon T3 du câble 28. La seule différence entre les systèmes 11 et 12 provient du fait que la zone de débarquement 29 est positionnée au début de la voie extérieure de circulation comprenant le deuxième tronçon T4 tandis que la zone d'embarquement 16 est placée en bout de la voie extérieure de circulation comprenant le deuxième tronçon T2.

Le débarquement d'un passager P embarqué à bord d'une cabine C de l'installation de transport 10 se pratique de la manière suivante : tous les véhicules Y sont accouplés fixement au câble 28 de manière à être entraînés sur le premier tronçon T3 dans une position adjacente à une cabine C en regard de celle-ci. Le transfert du passager P préalablement dans la cabine C vers le véhicule Y adjacent est donc possible avec un différentiel de vitesse sensiblement égal à zéro. De manière avantageuse, l'actionnement du mécanisme de sécurité de type barrière ou porte palière équipant le véhicule V adjacent du système d'aide à l'embarquement 11 peut éventuellement n'être autorisé qu'à l'issue d'une temporisation prédéterminée durant laquelle le véhicule Y est dans la position adjacente à la cabine C. Une telle variante permet de pratiquer le transfert de la cabine C vers le véhicule Y du système d'aide au débarquement 12 de manière anticipée par rapport au transfert du véhicule V du système d'aide à l'embarquement 11 vers la cabine C. Après le transfert de la cabine C vers le véhicule Y, le véhicule Y est ensuite déplacé par le câble 28 en direction du deuxième tronçon T4. Le quai de débarquement 29 est équipé d'un tapis de transfert 30 dont la trajectoire coïncide avec la trajectoire des véhicules Y dans le deuxième tronçon T4. La vitesse du tapis de transfert 30 est par exemple réglée pour être sensiblement égale à la vitesse de déplacement des véhicules Y le long du deuxième tronçon T4. Une telle variante permet de maintenir un différentiel de vitesse sensiblement égal à zéro pendant le transfert du passager P du véhicule Y vers la zone de débarquement 29, pour une sécurité renforcée. Puis le passager P sur le tapis de transfert 30 vient se placer sur le quai de la zone de débarquement 29 (flèche F5 sur la figure 1). Cette opération au cours de laquelle un différentiel de vitesse existe entre le passager P et le quai ne présente aucun risque car le différentiel de vitesse peut se compenser dans le sens de marche du passager P.

Il est également possible de prévoir que les vitesses des tapis de transfert 19 et 30 puissent chacune être modulées pour limiter voire annuler le différentiel de vitesse subi par le passager P respectivement pendant sa mise en place sur le tapis de transfert 19 et pendant sa descente sur le quai de la zone de débarquement 29.

Bien que, pour les systèmes d'aide 11 et 12 préalablement décrits, les câbles 14 et 28 soient entraînés à vitesse constante, il est possible de prévoir que chacun d'entre eux soit ralenti, voire stoppé, au moment où une série de véhicules V, Y correspondants est positionnée le long respectivement de la zone d'embarquement 16 et de la zone de débarquement 29. Cette variante permet avantageusement de s'affranchir de la présence des tapis de transfert 19, 30.

Dans une variante, il est possible de prévoir que les véhicules V, Y soient accouplés au câble 14, 28 correspondant au moyen de pinces d'accrochages de type débrayable. Sous réserve de prévoir des systèmes de débrayage des pinces en amont des deuxièmes tronçons T2 et T4 et des systèmes d'embrayage des pinces au câble 14, 28 en aval des deuxièmes tronçons T2, T4, une telle variante permet de réaliser le transfert entre la zone d'embarquement 16 ou de débarquement 29 et les véhicules V, Y en réduisant voire annulant le différentiel de vitesse, tout en s'affranchissant de la présence des tapis de transfert 19, 30. Les véhicules V, Y à l'état débrayé doivent par contre être mis en mouvement par des moyens de déplacement indépendants du câble 14, 28.

Toutefois, quelle que soit la variante retenue, il reste que les véhicules V, Y sont accouplés au câble 14, 28 correspondant au moins sur le premier tronçon T1, T3 dudit câble 14, 28, pour un entraînement synchrone des véhicules V, Y dans la position adjacente aux cabines C.

Les véhicules V, Y décrits ci-dessus peuvent être remplacés par tout véhicule équivalent, par exemple de type suspendu au câble 14, 28. Dans ce dernier cas, le câble 14, 28 doit alors en outre assurer les fonctions de portage et de guidage des véhicules. En fonction du type de véhicule utilisé, le chemin de roulement 21 peut ne border qu'une partie de la boucle fermée formée par le câble 14, 28 correspondant, voire être supprimé.

Bien que décrits comme étant indépendants l'un de l'autre, les systèmes d'aide 11 et 12 pourraient être regroupés en un seul système d'aide à l'embarquement et au débarquement n'utilisant qu'une seule boucle fermée de câble, auquel ne serait accouplée à intervalle régulier qu'une série de véhicule. Une telle variante nécessite une synchronisation appropriée entre les transferts du véhicule vers la cabine C et de la cabine C vers le véhicule.

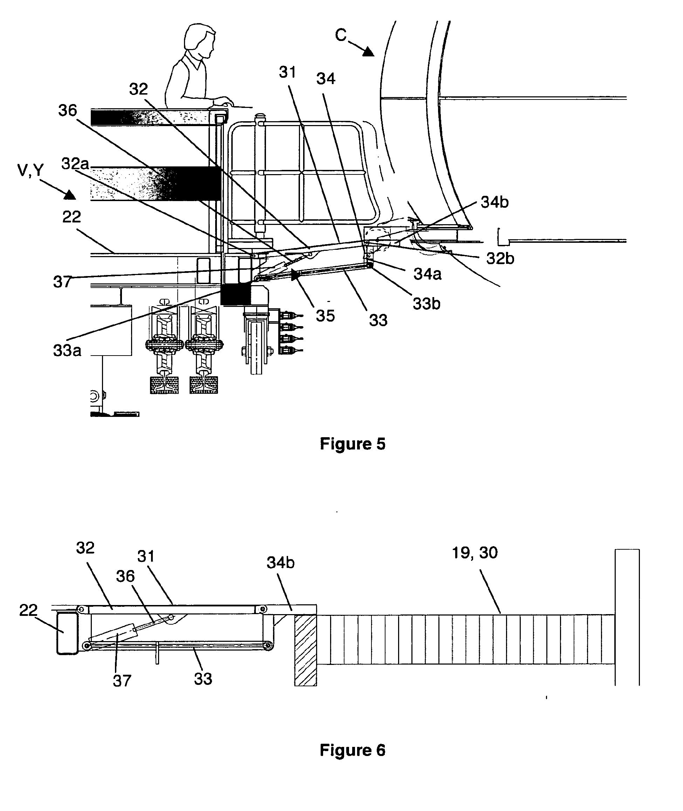

Sur les figures 5 et 6, les véhicules V, Y sont modifiés. Pour chacun, le seuil rétractable 27 est remplacé par une rampe inclinable 31 piétonne agencée en saillie du véhicule X, Y, inclinable autour d'un axe de pivotement coïncidant avec la direction de déplacement du véhicule V, Y. Des moyens de variation de l'angle entre la rampe 31 et le véhicule V, Y sont prévus. Par exemple sur la figure 5, la rampe inclinable 31 présente un angle sensiblement égal à 7 degrés par rapport à l'horizontale pour compenser la différence de hauteur entre la plate-forme 22 et le sol de la cabine C. Par contre sur la figure 6, la rampe inclinable 31 est sensiblement horizontale car la plate-forme 22 et le tapis de transfert 19, 30 sont sensiblement coplanaires.

Les moyens de variation de l'angle entre la rampe inclinable 31 et le véhicule comporte V, Y comportent un système de support à parallélogramme déformable dans un plan vertical, comprenant :
- deux bras pivotants 32, 33 parallèles entre eux, articulés sur le véhicule V, Y à une extrémité proximale 32a, 33a, et dont l'un 32 au moins supporte ladite rampe inclinable 31,
- un élément de liaison 34 d'orientation spatiale fixe par rapport au véhicule V, Y, articulé aux extrémités distales 32b, 33b desdits bras pivotants 32, 33,
- et un vérin d'actionnement 35 muni d'une tige coulissante 36 dont la translation commande la variation de l'angle entre les bras pivotants 32, 33 et l'élément de liaison 34.

Plus précisément, les extrémités proximales 32a, 33a des bras pivotants 32, 33 sont montées à pivotement libre sur la plate-forme 22 en deux points superposés verticalement. Les extrémités distales 32b, 33b des bras pivotants 32, 33 sont montées articulées aux extrémités d'une branche verticale 34a de l'élément de liaison 34 (ou réciproquement la branche verticale 34a de l'élément de liaison 34 est articulée sur les extrémités distales 32b, 33b) qui présente une forme d'équerre avec une branche horizontale 34b tournée à l'opposé du véhicule V, Y. Selon le principe du parallélogramme déformable, les branches verticale 34a et horizontale 34b restent respectivement verticale et horizontale quel que soit l'état de déformation du parallélogramme, c'est-à-dire quel que soit l'angle formé entre les bras pivotants 32, 33 et le véhicule V, Y.

Dans l'exemple illustré, la rampe inclinable 31 est solidarisée par tout moyen adapté au bras pivotant supérieur 32, mais pourrait également être lié au bras pivotant 33. La tige coulissante 36 est articulée à son extrémité distale dans une zone médiane du bras pivotant supérieur 32. La tige 36 se déplace en translation rectiligne dans un corps 37 tubulaire du vérin d'actionnement 35 sous l'action d'un fluide sous pression tel que de l'air ou de l'huile. Du côté opposé à l'ouverture de sortie de la tige coulissante 36, le corps 37 est monté articulé sur le véhicule V, Y, plus précisément sur la plate-forme 22, à proximité de l'articulation de l'extrémité proximale 33a du bras pivotant inférieur 33.

Avec un tel agencement, le mouvement de sortie de la tige coulissante 36 commande l'augmentation de l'angle d'inclinaison de la rampe inclinable 31 par rapport à l'horizontale. Inversement, le mouvement de retrait de la tige coulissante 36 commande la diminution de l'angle d'inclinaison de la rampe inclinable 31 par rapport à l'horizontale. L'angle d'inclinaison de la rampe 31, directement fonction de l'état de sortie de la tige coulissante 36, est adapté à chaque instant le long des premiers tronçons T1 et T3 pour compenser la différence de hauteur entre la plate-forme 22 et le sol de la cabine C en maintenant la branche horizontale 34b au niveau (en appui dessous) du sol de la cabine C. De manière complémentaire, l'angle d'inclinaison de la rampe 31 est adapté à chaque instant le long des deuxièmes tronçons T2 et T4 pour compenser la différence de hauteur entre la plate-forme 22 et les tapis de transfert 19, 30 en maintenant la branche horizontale 34b au niveau (en appui dessus) des tapis de transfert 19, 30.

Ainsi, la rampe inclinable 31 associée aux moyens de variation de l'angle entre la rampe 31 et le véhicule V, Y permet de compenser d'une part les différences de hauteur entre la plate-forme 22 et soit le sol de la cabine C, soit les tapis de transfert 19, 30, et d'autre part les écarts horizontaux entre ces éléments. C'est pour cette raison que la branche horizontale 34b de l'élément de liaison vient en appui par dessous ou par dessus respectivement contre le sol de la cabine C et contre les tapis de transfert 19, 30.

Les moyens de variation de l'angle entre la rampe 31 et le véhicule V, Y décrits ci-dessous ne sont qu'un exemple particulier simple de mise en oeuvre, mais peuvent toutefois être remplacés par toute solution analogue adaptée.

Enfin, l'invention peut être appliquée à tout type d'installation de transport de cabines en circuit fermé, notamment à tout type de téléporteur de transport comme par exemple un télécabine à pinces fixes utilisant un câble tracteur à vitesse de défilement très élevée (supérieure à 0,5 m/s).

## Revendications

1. Système d'aide à l'embarquement et/ou au débarquement (11, 12) de passagers (P) à bord de cabines (C) d'une installation de transport (10) dans laquelle les cabines (C) se déplacent à vitesse sensiblement constante à intervalle régulier le long d'un circuit fermé, système (11, 12) **caractérisé en ce qu'**il comporte :
- un câble (14, 28) en boucle fermée défilant par des moyens d'entraînement (M) et ayant un premier tronçon (T1, T3) agencé tangentiellement à un tronçon du circuit fermé et un deuxième tronçon (T2, T4) disposé le long d'une zone d'embarquement et/ou de débarquement (16, 29) des passagers (P) à bord de véhicules (V, Y) accouplés au câble (14, 28) au moins sur le premier tronçon (T1, T3), avec un échelonnement égal à un multiple de l'intervalle entre les cabines (C),
- et des moyens d'asservissement de la vitesse de défilement du câble (14, 28) en fonction de la vitesse de déplacement des cabines (C) pour positionner en continu chaque véhicule (V, Y) parcourant le premier tronçon (T1, T3) en regard d'une cabine (C).

2. Système selon la revendication 1, **caractérisé en ce que** les moyens d'accouplement des véhicules (V, Y) au câble (14, 28) sont constitués par des pinces fixes d'accrochage (17) portées par les véhicules (V, Y), et la zone d'embarquement et/ou de débarquement (16, 29) comporte un tapis de transfert (19, 30) ayant une trajectoire coïncidant avec la trajectoire des véhicules (V, Y) dans le deuxième tronçon (T2, T4).

3. Système selon la revendication 2, **caractérisé en ce qu'**au moins l'un des véhicules (V, Y) comporte des moyens d'ajustement du périmètre de la boucle fermée formée par le câble (14, 28).

4. Système selon l'une des revendications 1 à 3, **caractérisé en ce qu'**un chemin de roulement (21) est disposé parallèlement au câble (14, 28) pour guider les véhicules (V, Y) pendant leur déplacement.

5. Système selon la revendication 4, **caractérisé en ce que** chaque véhicule (V, Y) comporte un chariot (20) roulant dans le chemin de roulement (21) et une plate-forme (22) solidaire du chariot (20) correspondant par des moyens de liaison.

6. Système selon la revendication 5, **caractérisé en ce que** les moyens de liaison comprennent des moyens d'orientation de la plate-forme (22) par rapport au chariot (20) selon au moins un axe de rotation et des moyens de maintien automatique de l'assiette de la plate-forme (22) par pivotement autour dudit axe de rotation.

7. Système selon la revendication 5, **caractérisé en ce que** chaque chariot (20) est équipé d'une première roue (23a, 23b) et d'une deuxième roue (24a, 24b) décalées dans la direction de déplacement du chariot (20), le chemin de roulement (21) comportant deux rails de guidage (25a, 25b, 26a, 26b) indépendants recevant respectivement l'une des première et deuxième roues (23a, 23b, 24a, 24b) et occupant une position relative dans le plan vertical adaptée pour maintenir le chariot (20) horizontal quelle que soit sa position le long du chemin de roulement (21).

8. Système selon l'une des revendications 1 à 7, **caractérisé en ce que** chaque véhicule (V, Y) est équipé d'un seuil rétractable (27), variant par des moyens d'actionnement entre une position sortie en saillie du véhicule (V, Y), occupée sur le premier tronçon (T1, T3) pour combler l'intervalle entre le véhicule (V, Y) et la cabine (C) adjacente, et une position rentrée logé dans le véhicule (V, Y).

9. Système selon l'une des revendications 1 à 7, **caractérisé en ce que** chaque véhicule (V, Y) comporte en saillie une rampe inclinable (31) autour d'un axe de pivotement coïncidant avec la direction de déplacement du véhicule (V, Y), et des moyens de variation de l'angle entre la rampe (31) et le véhicule (V, Y).

10. Système selon la revendication 9, **caractérisé en ce que** les moyens de variation de l'angle entre la rampe (31) et le véhicule (V, Y) comporte un système de support à parallélogramme déformable comprenant :
- deux bras pivotants (32, 33) parallèles entre eux, articulés sur le véhicule (V, Y) à une extrémité proximale (32a, 33a), et dont l'un (32) au moins supporte ladite rampe (31),
- un élément de liaison (34) d'orientation spatiale fixe par rapport au véhicule (V, Y), articulé aux extrémités distales (32b, 33b) desdits bras pivotants (32, 33),
- et un vérin d'actionnement (35) muni d'une tige coulissante (36) dont la translation commande la variation de l'angle entre les bras pivotants (32, 33) et l'élément de liaison (34).

11. Système selon l'une des revendications 1 à 10, **caractérisé en ce que** le circuit fermé présente une forme circulaire comprise dans un plan vertical (X) et la partie de chemin de roulement (21) bordant le premier tronçon (T1, T3) présente une forme d'arc de cercle compris dans un plan vertical (Z) parallèle.
